# DEMANDE DE BREVET EUROPEEN

(11) **EP 1 762 829 A1**
(43) Date de publication de la demande: **14.03.2007**
(21) Numéro de dépôt: 06291420.5
(22) Date de dépôt: 08.09.2006
(51) Int. Cl.: G01F 1/24, H01H 35/40, G01P 13/00

(54) **Dispositif de détection de débit de fluide.**

(30) Priorité: 12.09.2005 FR 0509277
(71) Demandeur: Airindex, 37170 Chambray les Tours (FR)
(72) Inventeur: Da Silva Gomes, Philippe, 37200 Tours (FR); Da Silva Gomes, Vitorino, 37200 Tours (FR); Rochette, Vincent, 69480 Anse (FR)
(74) Mandataire: Casalonga, Axel

(57) **Abrégé**

Dispositif de détection de débit de fluide comprenant une canalisation (1) destinée à recevoir le fluide, un corps (5a), mobile sous l'effet du fluide, guidé dans la canalisation (1) par un moyen de guidage (4), et présentant une partie en matériau aimantable (5), un moyen de détection (28) de présence d'un aimant, et un moyen de rappel du corps s'opposant à l'effet du fluide lorsque le débit est inférieur ou égal à un seuil. La partie (5) du corps (5a) en matériau aimantable présente une forme complémentaire (21) coopérant avec le moyen de guidage (4, 17).

## Description

L'invention concerne le domaine des dispositifs et des procédés de détection d'un débit de fluide.

Les dispositifs de détection de débit sont des organes de sécurité essentiels pour les chaudières à serpentin. En cas d'interruption ou de restriction excessive de la circulation du fluide dans le serpentin, les détecteurs de débit permettent de couper ou de réduire la quantité de chaleur apportée au serpentin, et évitent l'explosion de la chaudière. Ils sont généralement associés à d'autres systèmes de sécurité utilisant des capteurs de pression ou de température du fluide.

Certains dispositifs, comme les débitmètres à turbine, permettent de mesurer le débit de fluide, mais sont chers et ne conviennent pas pour équiper des chaudières à gaz domestiques, où la sécurité doit être assuré avec des composants bon marché.

D'autres dispositifs utilisés dans les chaudières domestiques à gaz comprennent un flotteur entraîné par l'eau en circulation, inséré dans une conduite verticale. Le poids du flotteur compense l'action de l'eau pour le débit à détecter. Lorsque le débit d'eau est inférieur au débit à détecter, le flotteur tombe en position basse. Lorsque le débit est supérieur au débit à détecter, le flotteur est emporté en butée haute. Un interrupteur à lames souples est positionné en butée haute. Le flotteur comprend un aimant qui provoque le rapprochement des lames souples lorsque l'aimant arrive à proximité de l'interrupteur. Le flotteur est maintenu au centre de la conduite et présente généralement une forme bombée centrale hydrodynamique qui réparti le flux d'eau tout au tour du flotteur. Un tel flotteur est complexe et comprend généralement plusieurs pièces. Cela entraîne un temps d'assemblage et un coût global élevé, incompatible avec des appareils domestiques. De plus, les normes sanitaires limitent les matériaux en contacte avec l'eau en circulation. Le nombre de pièces différentes augmente les problèmes de compatibilité sanitaire et le coût global.

Un autre inconvénient de ce type de dispositif est que le flotteur risque d'être bloqué par des impuretés en circulation dans le serpentin.

Un autre inconvénient de ce type de dispositif est que, lorsque le débit est sensiblement voisin du débit à détecter, le flotteur oscille entre la position haute et la position basse. Cela provoque des arrêts et redémarrages successifs de la chaudière ainsi que des à-coups indésirables dans la circulation de l'eau.

La demande de brevet FR 1 317 879 (DISERVI) a décrit en 1962 un indicateur de débit équipé d'une masse en matière aimantée, percé d'un trou lisse enfilé sur une tige de guidage. Ce dispositif présente l'inconvénient que la turbulence du fluide s'écoulant autour du flotteur exerce des efforts erratiques importants sur le flotteur dans toutes les directions et notamment selon une direction perpendiculaire à la tige de guidage. Cela provoque un bruit désagréable, et risque de dégrader le dispositif.

Le modèle d'utilité DE 91 09 854 U1 (SCHIFFER) a décrit en 1991 un dispositif avec un flotteur muni d'un aimant et un commutateur à lame souple. Le flotteur peut coulisser le long d'une barre centrale en étant guidé par deux diamètres de guidage. La réduction du jeu mécanique entre le flotteur et la barre permet de réduire le bruit du dispositif. Cependant, ce dispositif présente une instabilité de détection du débit. En effet, au voisinage du débit à détecter, les efforts erratiques auxquels est soumis le flotteur provoquent de légères montées et descentes du flotteur. Cela modifie suffisamment le champ magnétique perçu par le commutateur pour faire basculer de manière erratique l'état de la commutation.

On note, par ailleurs, que le commutateur à lame souple décrit change d'état lorsque le flotteur entre dans une zone de détection, c'est-à-dire, lorsque le champ magnétique émis par l'aimant du flotteur à l'endroit du commutateur à lame souple, atteint un seuil. Ce seuil de détection est généralement fonction d'un entrefer interne au commutateur.

L'interrupteur à lame souple du dispositif est généralement munis de contacts soudés à des fils intermédiaires, lesquels sont raccordés lors de l'installation du dispositif de détection de débit dans la chaudière. L'étape de soudure des fils intermédiaires est une étape longue et coûteuse.

De plus, les serpentins de chaudières sont généralement munis de soupapes de sécurité, reliant le serpentin à l'extérieur en cas de surpression. Le détecteur de débit prend une place supplémentaire par rapport à la soupape de sécurité.

L'invention propose un dispositif de détection de débit qui remédie aux problèmes précédents. Un but de l'invention est de réduire l'instabilité de la détection de débit tout en réduisant le bruit du détecteur.

Selon un mode de réalisation de l'invention, le dispositif de détection de débit de fluide comprend une canalisation destinée à recevoir le fluide, un corps, mobile sous l'effet du fluide, guidé dans la canalisation par un moyen de guidage axial, et présentant une partie en matériau aimantable, un moyen de détection de présence d'un aimant, et un moyen de rappel du corps s'opposant à l'effet du fluide lorsque le débit est inférieur ou égal à un seuil. Le corps est guidé sur une trajectoire de déplacement présentant une zone d'attirance entre la partie en matériau aimantable et le détecteur d'aimant. Le moyen de guidage et le corps présentent, dans la zone d'attirance, un jeu radial. L'attirance mutuelle est apte à plaquer le corps contre le guide ou la canalisation en fonction des dimensions et des jeux respectifs.

Un tel dispositif de détection se distingue notamment du dispositif décrit dans le modèle d'utilité précité, en particulier par le fait que la trajectoire du corps présente une zone d'attirance apte à plaquer le corps et non pas seulement une zone de détection. Pour une partie en matériau aimantable donnée, la zone d'attirance dépend de la masse magnétique du détecteur d'aimant et est indépendante d'un entrefer interne à ce détecteur. Quand le corps entre dans la zone d'attirance, la partie en matériau aimantable et la masse magnétique du détecteur s'attirent. Grâce au jeu radial dans la zone d'attirance, le corps peut se rapprocher du détecteur. Cela permet d'augmenter l'attirance mutuelle jusqu'à une valeur maximum. De plus, l'attirance mutuelle est apte à plaquer le corps. Autrement dit, l'effort de plaquage est, dans la position de plaquage, supérieur à un seuil. Ce seuil permet de vaincre les efforts subis par le corps dus à la turbulence du fluide lorsque le corps reste plaqué. Cela réduit le bruit du dispositif et crée un effort de frottement tangentiel entre le corps et la partie sur laquelle il est plaqué. Grâce au jeu radial, le frottement de plaquage n'existe pas lorsque le corps pénètre dans la zone d'attirance, alors qu'il existe lorsque le corps sort de ladite zone. Cela a comme effet que le débit nécessaire pour faire entrer le corps dans la zone de détection et dans la zone d'attirance est différent du débit pour faire sortir le corps. Cela réduit l'instabilité de la détection.

La partie du corps en matériau aimantable présente une forme complémentaire coopérant avec le moyen de guidage. En particulier, le corps peut être composé essentiellement d'un aimant.

Dans un tel dispositif, grâce à la forme complémentaire du moyen de guidage, la partie du corps en matériau aimantable est susceptible d'être guidée directement par le moyen de guidage, et de constituer l'essentiel du corps mobile. Cela permet de diminuer le nombre de pièces du corps, simplifie l'assemblage et la compatibilité sanitaire.

Avantageusement, lorsque le corps est dans la zone d'attirance, le moyen de guidage et la forme complémentaire de la partie aimantable présentent un jeu radial.

Selon un mode de réalisation, le moyen de guidage comprend un doigt dans l'axe d'écoulement du fluide, la partie du corps en matériau aimantable présentant un logement dans une zone centrale du corps apte à recevoir le doigt.

Avantageusement, lorsque le corps est dans la zone d'attirance, le diamètre du logement est supérieur au diamètre du doigt et la partie en matériau aimantable est apte à parcourir le jeu radial entre le diamètre et le doigt. Le corps est soumis à une pression de contact sur une partie solidaire de la canalisation. Ainsi, le déplacement du corps en fonction du débit du fluide présente un phénomène d'hystérésis.

Avantageusement, le doigt de guidage est parallèle à l'axe de la canalisation et décalé radialement par rapport à cet axe. Cela permet au fluide d'avoir une veine d'écoulement de plus grande section, évitant de bloquer le corps lorsqu'une particule circule dans la canalisation.

Avantageusement, le moyen de guidage présente une butée en amont et une butée en aval, au moins l'une des butées comprend un matériau élastomère. Cela permet de supprimer les bruits de chocs éventuels lors de l'arrêt de la circulation d'eau.

Selon un mode de réalisation du dispositif, le moyen de guidage est capable de guider le corps selon une position transversale décentrée par rapport à la section droite de la canalisation.

Selon un mode de réalisation du dispositif, le détecteur de présence d'aimant comprend une partie sensible à la présence d'un aimant, raccordée par deux conducteurs , le dispositif comprenant également deux broches emmanchées dans un boîtier, chacun des conducteurs étant comprimé entre le boîtier et une des broches. En particulier, le détecteur de présence d'aimant peut comprendre un interrupteur à lame souple.

Selon un mode de réalisation du dispositif, la canalisation est disposée verticalement et destinée à être traversée par le fluide du bas vers le haut, le moyen de rappel étant assuré par le poids du corps. Avantageusement, la canalisation présente une section droite variable le long de la trajectoire de déplacement du corps, dans lequel la position du détecteur d'aimant est réglable le long de ladite trajectoire de manière à régler le seuil de débit détecté.

Selon un mode de réalisation du dispositif, le moyen de guidage du corps est réglable de manière que la distance du détecteur de présence d'aimant à la trajectoire de déplacement du corps puisse être augmentée ou réduite pour régler une différence entre un débit d'enclenchement et un débit de désenclenchement du détecteur.

Selon un mode de réalisation du dispositif, la canalisation présente une dérivation tubulaire, un logement intérieur à la dérivation étant raccordé à l'intérieur de la canalisation par un canal et par une forme de réception d'une soupape de sécurité.

Selon un autre aspect de l'invention, celle-ci porte sur un procédé de détection de débit de fluide dans lequel on immerge, dans le fluide en écoulement dans une canalisation, un corps ayant une partie en matériau aimantable. Lorsque le débit du fluide est supérieur à un débit d'enclenchement d'un détecteur d'aimant, on ramène le corps dans une zone d'attirance entre la partie en matériau aimantable et le détecteur. On déplace radialement le corps jusqu'à le plaquer le plus près possible du détecteur, de manière que le débit de désenclenchement du détecteur soit inférieur au débit d'enclenchement.

Selon un mode de réalisation de l'invention, le procédé de détection de débit de fluide comprend une étape où on déplace un corps selon la direction d'écoulement du fluide, on immerge le corps dans le fluide en écoulement, on retient le corps avec un effort égal à l'effort subit par le corps lorsque le fluide présente le débit à détecter, on détecte la présence du corps dans une portion de la course de déplacement, caractérisé par le fait qu'on freine le déplacement du corps lorsque celui-ci est détecté.

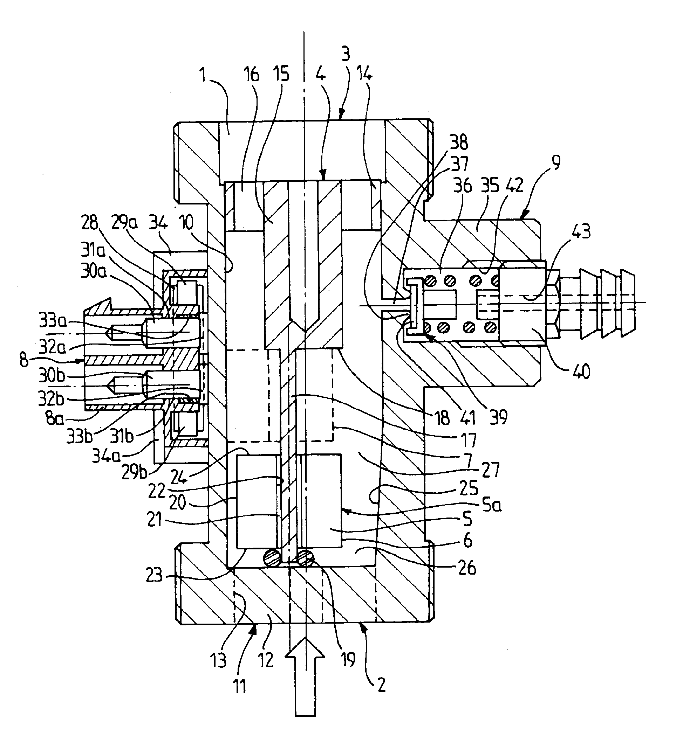

D'autres caractéristiques et avantages de l'invention apparaîtront à la lecture de la description détaillée de quelques modes de réalisation pris à titre d'exemples non limitatifs et illustrés par le dessin annexé, sur lequel la figure est une vue en coupe d'un mode de réalisation d'un détecteur de débit selon l'invention, équipé d'un dispositif de raccordement électrique de composant, et d'une soupape de sécurité.

Comme illustré sur la figure, le dispositif comprend un corps de canalisation 1 présentant une extrémité en amont 2 située au bas de la figure et une extrémité en aval 3 traversée par le fluide dont le débit est à détecter. Généralement, le fluide est de l'eau, mais peut être utilisé pour toutes sortes de fluides, tels que des hydrocarbures, des huiles, ou des alcools. Le dispositif comprend, à l'intérieur de la canalisation 1, un corps de guidage 4 emmanché à l'intérieur de la canalisation 1 et un aimant 5. L'aimant 5 est mobile entre une position basse 6 et une position haute 7 indiquée en pointillés sur la figure. Le dispositif comprend, à l'extérieur de la canalisation 1, un interrupteur connectorisé 8 et une soupape de sécurité 9.

Le corps de canalisation 1 présente un diamètre intérieur 10 et un croisillon d'entrée 11 composé de nervures en croix 12 séparant des évidements 13, représentés en pointillés sur la figure, par où le fluide pénètre à l'intérieur de la canalisation 1. Le corps de guidage 4 comprend une semelle 14, en forme de disque, emmanchée dans le diamètre intérieur 10. Le corps de guidage 4 comprend également une proéminence axiale 15 s'étendant depuis le centre de la semelle 14 en direction de l'intérieur du corps de canalisation 1. La semelle 14 est percée d'une multitude d'orifices 16 répartis tout autour de la proéminence axiale 15 et permettant au fluide de sortir de la canalisation 1. Un doigt de guidage 17 s'étend depuis un épaulement 18 de la proéminence axiale 15 jusqu'au voisinage du croisillon d'entrée 11. Le doigt de guidage 17 est parallèle à l'axe du diamètre intérieur 10 et décalé radialement par rapport à cet axe. Un joint torique 19 est monté serré à l'extrémité en amont du doigt de guidage 17, et est préférentiellement en matériau élastomère compatible avec des applications sanitaires. Cela permet d'amortir la chute du flotteur et de diminuer un bruit de choc éventuel.

L'aimant 5 est un tube cylindrique présentant un diamètre extérieur 20 et un logement intérieur 21, de diamètre 22, ainsi qu'un épaulement amont 23 et un épaulement aval 24, tous les deux sensiblement perpendiculaires à l'axe des diamètres intérieur 22 et extérieur 20. Le logement 21, traversé par le doigt de guidage 17, est une forme complémentaire du doigt 17 et coopère au guidage de l'aimant 5. La surface intérieure 10 présente une partie inclinée 25 entre les positions basse 6 et haute 7 dans la partie opposée au support d'interrupteur 8. Lorsque l'épaulement amont 23 de l'aimant 5 est en position basse 6, le fluide peut passer à travers une section droite 25 entre l'aimant 5 et la surface intérieure 10. Lorsque l'aimant 5 est en position haute 7, le fluide peut passer à travers une section droite 26.

L'interrupteur connectorisé 8 comprend une ampoule 28 d'un interrupteur à lame souple situé parallèlement à l'axe de la canalisation 1 et en dessous du plan de coupe de la figure, de sorte que seules les extrémités haute et basse de l'ampoule 28 sont visibles, le reste étant indiqué en pointillés. L'ampoule 28 est munie de deux conducteurs plats 29a et 29b.

L'interrupteur connectorisé 8 comprend également un dispositif de raccordement électrique apte à recevoir n'importe quel composant muni de plusieurs conducteurs tels que les conducteurs 29a, 29b, et comprenant un corps en matériau isolant 8a, et une broche 30a ou 30b pour chaque conducteurs 29a ou 29b. Chaque broche 30a ou 30b comprend une zone de contacte intercalée axialement entre une collerette 32a, 32b, et un diamètre 31a ou 31b d'emmanchement dans le corps 8a. Le corps 8a comprend une partie de pressage 33a ou 33b pour chaque conducteur 29a ou 29b du composant. Chaque collerette 32a ou 32b présente un épaulement radial.

L'assemblage de l'interrupteur connectorisé 8 comprend les étapes ci-après. Les conducteurs plats 29a et 29b, s'échappant en partie haute et basse de l'ampoule 28, sont recourbés parallèlement à l'ampoule 28, puis perpendiculairement au plan de la figure. L'ampoule 28, et les conducteurs ainsi préformés, sont introduits dans le corps 8a. Deux broches 30a et 30b sont emmanchées dans les diamètres d'emmanchement 31a et 31b du corps 8a. Chaque collerette 32a ou 32b forçe le conducteurs plats 29a ou 29b à être comprimés entre la broche correspondante 30a ou 30b et la partie de pressage 33a ou 33b correspondante du corps 8a.

Le procédé de raccordement électrique d'un composant muni de plusieurs conducteurs 29a, 29b comprend une étape de préformage de chacun des conducteurs dans une direction transversale aux broches 30a, 30b, et une étape d'emmanchement dans laquelle chacun des conducteurs 29a, 29b est poussé par un épaulement d'une broche 30a, 30b. Chaque chaque sous ensemble broche-conducteur est emmanché dans un corps isolant 8a. La pression du conducteur sur la broche assure le contact électrique sans soudure. Avantageusement, lorsque les conducteurs du composant ne sont pas plats, le procédé de raccordement peut comprendre une étape d'aplatissement des conducteurs du composant à raccorder.

La forme des broches 30a et 30b, ainsi que la partie du corps 8a à gauche de la figure, correspondent à des formes d'accouplement de connecteurs standardisés. Ce dispositif et ce procédé de raccordement électrique d'un composant terminé par des conducteurs, n'est pas limité à une utilisation d'un interrupteur à lame souple magnétique et peut être par exemple utilisé pour le raccordement de résistances pour sondes de température de type CTN, CTP ou PT100 par exemple ou par tout type de composant électrique terminé par des conducteurs.

Lorsque le dispositif de raccordement électrique est utilisé dans un détecteur de débit, les broches 30a et 30b sont en matériau conducteur non magnétique, tel que du laiton, de manière à ne pas influencer le fonctionnement de l'interrupteur à lame souple et à assurer le bon raccordement électrique. L'interrupteur connectorisé 8 ainsi assemblé est glissé entre deux parois 34 s'étendant radialement du corps de canalisation 1, de part et d'autre du plan de coupe de la figure et retenu latéralement par une butée 34a également solidaire du corps de canalisation 1.

On va maintenant décrire le fonctionnement du dispositif de détection de débit de fluide. Le fluide pénètre en amont par les évidements 13 du corps de canalisation 1, puis s'écoule à travers la section transversale basse 26 tout en exerçant un effort sur l'épaulement amont 23 de l'aimant 5. L'axe de la canalisation 1 est disposé verticalement, de sorte que le poids de l'aimant s'oppose à l'effet du fluide sur l'épaulement amont 23. Si le fluide a un débit inférieur au seuil de débit à détecter, l'effort du fluide sur l'épaulement amont 23 est inférieur au poids de l'aimant 5 et l'aimant 5 reste dans la position basse 6 en appui sur le joint torique 19 faisant office de butée basse. Le joint torique 19 ferme l'entrée du logement intérieur 21, de sorte que le fluide ne s'écoule pas entre le doigt de guidage 17 et le diamètre 22 du logement 21. Lorsque le débit augmente, la section transversale que voit le fluide reste identique à la section transversale basse 26. La pression du fluide dans la section basse 26 et sur l'épaulement amont 23 augmente jusqu'à ce que le fluide exerce un effort égal au poids de l'aimant 5 pour une valeur du débit égale à celle d'un premier seuil. Un deuxième seuil de débit correspond à un effort exercé sur l'aimant 5 égal au poids de l'aimant 5 lorsque la section transversale que voit le fluide est égale à la section transversale haute 27. Le dispositif permet de détecter un débit intermédiaire entre le premier et le deuxième seuils, pour lequel la position d'équilibre entre l'effort du fluide exercé sur l'aimant 5 et le poids de l'aimant 5 correspond à une position de l'aimant 5 située entre la position basse 6 et la position haute 7. Le réglage en hauteur de l'interrupteur connectorisé 8 le long de la canalisation 1, permet de régler le débit détecté pour n'importe quelle valeur de débit située entre le premier et le deuxième seuil de débit. Il est également possible de détecter simultanément plusieurs seuils de débit en disposant radialement plusieurs détecteurs, du type des interrupteurs à lame souples, selon des positions axiales différentes.

Lorsque le débit de fluide augmente au-dessus du deuxième seuil de débit, la section transversale que voit le fluide reste constante, égale à la section transversale haute 27 et le fluide fait monter l'aimant 5 jusqu'à ce que l'épaulement aval 24 de l'aimant 5 soit en contact avec l'épaulement 18 de la proéminence axiale 15 formant ainsi une butée haute. L'épaulement 18 ferme le logement intérieur 21, de sorte que le fluide ne s'écoule pas entre le diamètre 22 et le doigt 17.

Dans une variante de réalisation, la surface intérieure 10 est cylindrique, de sorte que les sections transversales basse 26 et haute 27 sont identiques. Le premier et le deuxième seuils de débit sont identiques au débit à détecter et il n'y a pas de position d'équilibre intermédiaire pour l'aimant entre la position basse 6 et la position haute 7. Lorsque le débit de fluide dépasse le débit à détecter, le dispositif réagit de manière soudaine en provoquant la montée ou la descente de l'aimant 5. La transition entre les positions haute et basse étant rapide, le fluide n'a pas le temps de s'écouler entre le doigt de guidage 17 et le diamètre 22 du logement 21, de sorte que les impuretés ne sont pas incitées à venir s'y coincer.

La trajectoire de déplacement de l'aimant 5 comprend une zone de détection pour laquelle l'aimant crée à l'endroit de l'interrupteur à lames souples 28, un champ magnétique supérieur à un seuil de détection. Lorsque le champ magnétique à l'endroit de l'interrupteur à lame souple 28 est inférieur au seuil de détection, les lames souples ne se touchent pas et sont en regard avec un faible entrefer. Lorsque l'aimant 5 s'approche de l'interrupteur 28, la présence de l'aimant 5 augmente le champ magnétique à l'endroit de l'interrupteur 28, au-delà du seuil de détection. Les lames souples sont en matériau magnétique et sont attirées l'une vers l'autre jusqu'au contact.

A l'intérieur de la zone de détection, la trajectoire de déplacement de l'aimant 5 comprend une zone d'attirance pour laquelle l'aimant et les parties magnétiques de l'interrupteur 28, s'attirent mutuellement. Le diamètre 22 du logement 21 est supérieur au diamètre du doigt de guidage 17. Lorsque l'aimant 5 passe de la position basse 6 à la position haute 7, il peut également parcourir le jeu radial entre le diamètre 22 et le doigt 17. Avant que l'épaulement aval 24 de l'aimant 5 ne vienne toucher l'épaulement 18 de la proéminence axiale 15, l'attirance mutuelle vient plaquer l'aimant le plus près possible de l'ampoule interrupteur 28.

Avantageusement, on choisit le détecteur d'aimant de manière que la zone d'attirance coïncide sensiblement à la zone de détection. On choisit pour cela un interrupteur à lame souple 28 dont le seuil de détection, défini par l'entrefer entre les lames souples au repos, correspond au seuil d'attirance, défini par la masse magnétique de l'ensemble de l'interrupteur 28. Lorsque la zone d'attirance est au milieu de la zone de détection et plus restreinte qu'elle, le dispositif bénéficie de l'amélioration du bruit et de la stabilité de détection si le corps détecté poursuit obligatoirement sa course jusqu'à la zone d'attirance. C'est le cas dans le mode de réalisation décrit qui fonctionne en tout ou rien. Inversement, lorsque la zone de détection est au milieu et plus restreinte que la zone d'attirance, le corps est d'abord attiré vers le détecteur 28 avant d'être détecté par lui. Cependant, la turbulence du fluide l'empêche de rester plaqué en permanence. Au fur et à mesure que le corps pénètre à l'intérieur de la zone d'attirance pour rejoindre la zone de détection, l'attirance augmente. Ainsi, quand le corps pénètre dans la zone de détection, il existe un niveau de turbulence du fluide pour lequel le niveau d'adhérence est apte à plaquer le corps et bénéficie ainsi de l'amélioration du bruit et de la stabilité de détection.

La différence entre l'attirance mutuelle en position de plaquage et l'attirance mutuelle lorsque le corps pénètre dans la zone d'attirance en position quelconque guidée par le moyen de guidage, est d'autant plus importante que le jeu radial est élevé.

Par exemple, l'aimant 5 peut être un cylindre de diamètre extérieur 8 mm, un diamètre 22 du logement 21 de 3 mm et un diamètre de guidage du doigt 17 de 2 mm.

Dans une variante, la surface extérieure du doigt de guidage 17 vient-en appui sur le diamètre 22 du logement de l'aimant 5. Dans une autre variante, le diamètre extérieur 20 de l'aimant vient en appui sur la surface intérieure 10 de la canalisation 1. Dans l'une ou l'autre des variantes, l'aimant 5 est en appui sur une partie solidaire de la canalisation 1 et l'attirance mutuelle vient exercer une pression de contact dans une direction transversale à l'écoulement du fluide. Le débit de fluide nécessaire pour amener l'aimant 5 à rejoindre la zone d'attirance, est un débit d'enclenchement du détecteur. Lorsque le débit de fluide diminue, l'aimant 5 reste en position haute 7 tant que le débit n'a pas atteint un débit de désenclenchement inférieur au débit d'enclenchement. A ce débit de désenclenchement, le poids compense non seulement l'effort qu'exerce le fluide sur l'épaulement 23 de l'aimant 5, mais aussi l'effort d'adhérence ou de frotement qu'exerce la partie solidaire de la canalisation 1 soumis à une pression de contact par l'aimant 5. La différence entre le débit d'enclenchement et le débit de désenclenchement, est directement liée à la pression de contact transversale et peut être réglée en faisant tourner l'axe du doigt de guidage 17 autour de l'axe du corps de guidage 4, modifiant ainsi la distance entre l'aimant et le détecteur.

On va maintenant décrire la soupape de sécurité 9, qui peut être associée au dispositif de détection de débit précédemment décrit ou à tout autre dispositif d'écoulement de fluide muni d'un corps de canalisation 1 et d'une surface intérieure 10. Le corps de canalisation 1 présente une dérivation tubulaire 35 monobloc avec le corps de canalisation 1, et d'axe sensiblement perpendiculaire à l'axe de la canalisation 1. La dérivation tubulaire 35 présente un logement intérieur 36 communiquant avec l'intérieur de la canalisation 1 par un canal de raccordement 37. Le canal de raccordement 37 débouche dans le logement intérieur 36 par une proéminence torique 38, coaxiale avec le canal de raccordement 37, constituant une forme de réception d'un embout de soupape 39. L'embout de soupape 39, guidé axialement par un corps de soupape 40, comprend une couche de joint silicone 41 en appui sur la proéminence torique 38 et obstruant le canal de raccordement 47. L'effort de pressage du joint plat 41 est assuré par un ressort dont l'effort peut être ajusté en faisant tourner le corps de soupape 40 dans un filetage 42 ménagé dans la dérivation tubulaire 35. Lorsque la pression d'un fluide à l'intérieur de la canalisation 1 dépasse un seuil de sécurité, l'embout de soupape 39 se soulève et du fluide peut s'échapper par un canal 43 ménagé à l'intérieur du corps de soupape 39.

Dans une variante, non représentée sur la figure, le corps de soupape 40 présente dans sa partie cylindrique des stries de freinage anti-retour coopérant avec la partie cylindrique correspondante de la dérivation tubulaire 35. En enfonçant de force un tel corps de soupape 40 dans la dérivation tubulaire 35, on peut régler l'effort de pressage exercé par le ressort sur le joint plat 41 ainsi que la pression d'ouverture de la soupape de sécurité 9.

Le fait que le corps de canalisation 1, le canal de raccordement 37, la forme 38 de réception de soupape et la ramification tubulaire 35 soient moulés dans une même pièce monobloc, par exemple en plastique, permet de réduire grandement les coûts de fabrication d'un composant de fluide dans lequel la fonction de soupape de sécurité est avantageusement adjointe.

Dans une variante du dispositif de détection de débit, l'ensemble des pièces du corps de canalisation 1, du corps de guidage 4 et du support d'interrupteur 8, sont en plastique, par exemple une résine d'oxyde de polyphénylène de type Noryl.

Le mode de réalisation décrit comprend un corps mobile composé essentiellement de l'aimant 5. Le dispositif pourrait également comprendre un corps 5a composé de l'aimant 5 et par exemple d'une partie élastomère pour atténuer les chocs lorsque le corps passe de la position basse à haute 7 ou inversement.

Selon une autre variante, le corps 5a pourrait comprendre non pas un aimant 5, mais un matériau aimantable 5b, le dispositif étant équipé par ailleurs d'une source de champ magnétique 5c disposée dans une position telle, qu'en l'absence du matériau aimantable à proximité de l'interrupteur à lame souple 28, l'interrupteur 28 reste ouvert. Lorsque le matériau aimantable 5b arrive à proximité de l'interrupteur à lame souple 28, le champ magnétique créé par la source de champ magnétique 5c est concentré au voisinage du matériau aimantable 5b et l'interrupteur 28 se ferme.

Selon encore une autre variante, le moyen de rappel du corps 5a s'opposant à l'effet du fluide peut être un ressort. Il est possible de définir un premier et un deuxième seuil de débit, pour lesquels l'effort exercé par le fluide sur le corps 5a correspond à deux positions différentes, et cela malgré une surface 10 cylindrique.

Selon encore une autre variante, le corps de canalisation 1 peut avoir une section transversale non circulaire. Par exemple, la section droite de la canalisation peut être ovale et le doigt de guidage 17 situé sur un côté. Le corps 5a occupe une position transversale décentrée par rapport à la section droite de la canalisation 1. Ceci a l'avantage de permettre à des impuretés de dimensions significatives de passer entre le corps 5a et la partie opposée de la canalisation, sans risquer de coincer le déplacement du corps mobile 5a. Ceci peut également avoir l'avantage de dévier l'axe du flux par rapport à l'axe de la tuyauterie générale, de réduire localement l'encombrement du dispositif de détection de débit et de permettre d'accéder par exemple à un dispositif voisin déjà existant, tel qu'un dispositif de réglage.

## Revendications

1. - Dispositif de détection de débit de fluide comprenant une canalisation (1) destinée à recevoir le fluide, un corps (5a), mobile sous l'effet du fluide, guidé dans la canalisation (1) par un moyen de guidage axial (4), et présentant une partie en matériau aimantable (5), un moyen de détection (28) de présence d'un aimant, et un moyen de rappel du corps s'opposant à l'effet du fluide lorsque le débit est inférieur ou égal à un seuil, **caractérisé par le fait que** le corps (5a) est guidé sur une trajectoire de déplacement présentant une zone d'attirance entre la partie en matériau aimantable (5) et le détecteur d'aimant (28) et que le moyen de guidage (4) et le corps (5a) présentent, dans la zone d'attirance, un jeu radial, l'attirance mutuelle étant apte à plaquer le corps (5a).

2. - Dispositif selon la revendication 1, dans lequel, la partie (5) du corps (5a) en matériau aimantable présente une forme complémentaire (21) coopérant avec le moyen de guidage (4, 17) ; et dans lequel, lorsque le corps (5a) est dans la zone d'attirance, le moyen de guidage (4, 17) et la forme complémentaire (21) de la partie aimantable (5) présentent un jeu radial.

3. -Dispositif selon la revendication 1 ou 2, dans lequel le moyen de guidage (4) comprend un doigt (17) dans l'axe d'écoulement du fluide, la partie (5) du corps (5a) en matériau aimantable présentant un logement (21) dans une zone centrale du corps (5a) apte à recevoir le doigt (17).

4. - Dispositif selon la revendication 3, dans lequel lorsque le corps (5a) est dans la zone d'attirance, le diamètre (22) du logement (21) est supérieur au diamètre du doigt (17), et la partie en matériau aimantable (5) est apte à parcourir le jeu radial entre le diamètre (22) et le doigt (17).

5. - Dispositif selon la revendication 3 ou 4, dans lequel le doigt de guidage (17) est parallèle à l'axe de la canalisation (1) et décalé radialement par rapport à cet axe.

6. - Dispositif selon l'une quelconque des revendications précédentes, dans lequel le corps (5a) est composé essentiellement d'un aimant (5).

7. - Dispositif selon l'une quelconque des revendications précédentes, dans lequel le moyen de guidage présente une butée en amont (19) et une butée en aval (18), au moins l'une (19) des butées comprenant un matériau élastomère.

8. - Dispositif selon l'une quelconque des revendications précédentes, dans lequel le moyen de guidage (17) est capable de guider le corps (5, 5a) selon une position transversale décentrée par rapport à la section droite de la canalisation.

9. - Dispositif selon l'une quelconque des revendications précédentes, dans lequel le détecteur de présence d'aimant comprend un interrupteur à lame souple (28).

10. -Dispositif selon l'une quelconque des revendications précédentes, dans lequel le détecteur de présence d'aimant comprend une partie (28) sensible à la présence d'un aimant, raccordée par deux conducteurs (29a, 29b), le dispositif comprenant également deux broches emmanchées (30a, 30b) dans un boîtier (8), chacun des conducteurs (29a, 29b) étant comprimé entre le boîtier (8) et une des broches (30a, 30b).

11. -Dispositif selon l'une quelconque des revendications précédentes, dans lequel la canalisation (1) présente une section droite variable le long de la trajectoire de déplacement du corps (5a), dans lequel la position du détecteur (28) d'aimant est réglable le long de ladite trajectoire de manière à régler le seuil de débit détecté.

12. -Dispositif selon l'une quelconque des revendications précédentes, dans lequel le moyen (4) de guidage du corps est réglable de manière que la distance du détecteur (28) de présence d'aimant à la trajectoire de déplacement du corps puisse être augmentée ou réduite pour régler une différence entre un débit d'enclenchement et un débit de désenclenchement du détecteur (28).

13. -Dispositif selon l'une quelconque des revendications précédentes, dans lequel la canalisation (1) présente une dérivation tubulaire (35), un logement intérieur (36) à la dérivation (36) étant raccordé à l'intérieur de la canalisation (1) par un canal (37) et par une forme (38) de réception d'une soupape (39) de sécurité.

14. - Procédé de détection de débit de fluide dans lequel on immerge dans le fluide en écoulement dans une canalisation, un corps (5a) ayant une partie (5) en matériau aimantable ; lorsque le débit du fluide est supérieur à un débit d'enclenchement d'un détecteur d'aimant (28), on amène le corps dans une zone d'attirance entre la partie en matériau aimantable (5) et le détecteur (28), **caractérisé par le fait qu'**on déplace radialement le corps (5a) jusqu'à le plaquer le plus près possible du détecteur (28) de manière que le débit de désenclenchement du détecteur (28) soit inférieur au débit d'enclenchement.
